(19)

Europäisches
Patentamt
European
Patent Office
Office européen
des brevets

(11) **EP 4 357 164 B1**

(12) **EUROPEAN PATENT SPECIFICATION**

(45) Date of publication and mention
of the grant of the patent:
**12.02.2025  Bulletin 2025/07**

(21) Application number: **23198325.5**

(22) Date of filing: **19.09.2023**

(51) International Patent Classification (IPC):
***B60C 11/12*** *(2006.01)*

(52) Cooperative Patent Classification (CPC):
**B60C 11/1218;** B60C 2011/1213

(54) **PNEUMATIC TIRE AND TIRE MOLD**

LUFTREIFEN UND REIFENFORM

PNEUMATIQUE ET MOULE POUR PNEUMATIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **17.10.2022  JP 2022166151**

(43) Date of publication of application:
**24.04.2024  Bulletin 2024/17**

(73) Proprietor: **TOYO TIRE CORPORATION
Itami-shi,
Hyogo 6640847 (JP)**

(72) Inventors:
• **KAMADA, Nobuyuki
  Itami-shi 6640847 (JP)**
• **SATO, Keisuke
  Itami-shi 6640847 (JP)**

(74) Representative: **Balder IP Law, S.L.
Paseo de la Castellana 93
5ª planta
28046 Madrid (ES)**

(56) References cited:
**EP-A1- 1 223 054      EP-A1- 2 119 575
KR-A- 20220 087 039**

## Description

TECHNICAL FIELD

The present invention relates to a pneumatic tire having a tread including blocks in which sipes are formed, and a tire mold for molding the pneumatic tire.

BACKGROUND

A pneumatic tire has a tread which is a portion that contacts a road surface. The tread includes a plurality of blocks. Each block has sipes formed therein. The sipes provide an edge effect and a water removing effect on icy and snowy roads. The sipes on the pneumatic tire are formed by using sipe blades arranged in a tire mold.

For example, JP 2003-118322 A discloses a technique of forming sipes such that the amplitude of a waveform of the sipe is gradually decreased from the block surface side toward the block bottom side in the tire radial direction. In addition, JP 2010-202009 A discloses a technique of forming depressions in a block surface of one of sipe walls and reducing a cross-sectional area of the depressions from the block surface side to the block bottom side in the tire radial direction.

However, the pneumatic tires disclosed in JP 2003-118322 A and JP 2010-202009 A have room for improvement in improving braking performance on wet road surfaces and steering stability performance on dry road surfaces. EP 1 223 054 A1 discloses a tire running surface that comprises cutouts which form a zigzag or wavy tread pattern and incorporate the bounding surfaces of adjacent pointed body elements whose orientation alternates from cutout to cutout. KR 2022 0087039 A discloses a heavy-duty tire having a wave zipper-type tread cuff, to prevent the cuff from spreading and to increase the binding force between blocks to secure traction and braking force. EP 2 119 575 A1 discloses a snow tire for improving steering and braking performance while running on a general road surface, the snow tire comprising a plurality of tread blocks subdivided by a plurality of longitudinal grooves which are longitudinally formed on a tread rubber layer consisting of the tread, and a plurality of transverse grooves which are formed widthwise of the tire in cross relation with the longitudinal grooves.

SUMMARY

In consideration of the above, an object of the present invention to provide a pneumatic tire and a tire mold that can improve braking performance on wet road surfaces and improve steering stability performance on dry road surfaces.

A pneumatic tire according to the present invention has a tread including a block in which a sipe is formed. In this pneumatic tire, at least one wall surface of the sipe is formed in a waveform including a plurality of curved portions extending from a block surface side to a block bottom side when viewed from a tire radial direction. The curved portions include an inwardly curved portion that bulges toward the inside of the sipe and an outwardly curved portion that bulges toward the outside of the sipe. The radii of curvature of the inwardly curved portion and the outwardly curved portion differ on the block surface side in the tire radial direction, and the radii of curvature of the inwardly curved portion and the outwardly curved portion are identical on the block bottom side.

The pneumatic tire according to the present invention can improve braking performance on wet road surfaces and improve steering stability performance on dry road surfaces.

BRIEF DESCRIPTION OF DRAWINGS

Embodiments of the present disclosure will be described based on the following figures, wherein:

FIG. 1 is a schematic plane view showing blocks of a pneumatic tire according to an embodiment;
FIG. 2 is an enlarged view of a region A in FIG. 1;
FIG. 3 is an enlarged view of a region B in FIG. 2;
FIG. 4 is a schematic view showing waveforms on a block surface side and on a block bottom side;
FIG. 5 is a schematic view showing a tire mold according to an embodiment; and
FIG. 6 is a perspective view showing sipe blades according to an embodiment.

DESCRIPTION OF EMBODIMENTS

Embodiments of the present invention will be described in detail hereinafter. In the description below, specific shapes, materials, directions, numerical values, etc. are provided as illustrations for facilitating the understanding of the present invention, and can be appropriately changed according to applications, purposes, specifications, etc.

[Pneumatic Tire]

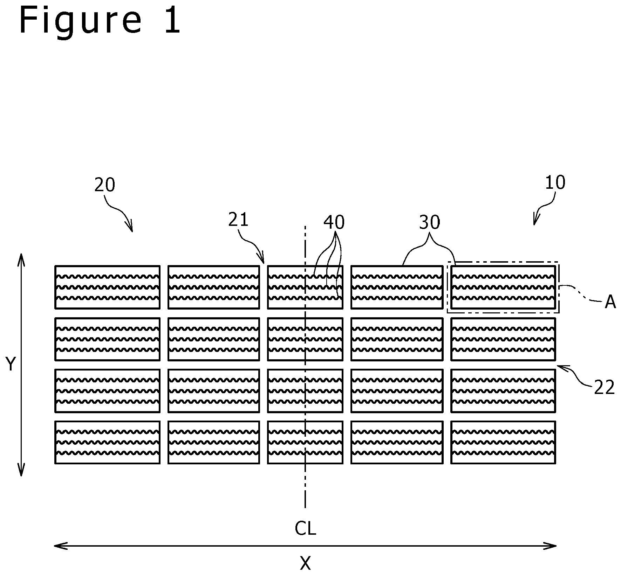

A pneumatic tire 10, which is an embodiment of the present invention, will be described with reference to FIG. 1.

As shown in FIG. 1, the pneumatic tire 10 has a tread 20 that includes blocks 30. The blocks 30 have sipes 40 formed therein. The pneumatic tire 10 makes it possible to improve braking performance on wet road surfaces and improve steering stability performance on dry surfaces (described in detail below).

Components of the pneumatic tire 10 will be described below with reference to a tire axial direction X, tire circumferential direction Y, and tire radial direction Z. The tire width may be described by using an equator CL with respect to the tire axial direction X. The tire depth in the tire radial direction Z may be described by using words "block surface side" and "block bottom side". The block surface and the block bottom are respectively labeled as SF and BM in the figures.

The tread 20 is a portion of the pneumatic tire 10 that contacts a road surface. The tread 20 has a plurality of blocks 30 separated by major grooves 21 and minor grooves 22. Each of the plurality of blocks 30 is formed to have a rectangular shape. The blocks closer to the equator CL in a plan view have a smaller length in the tire axial direction X. The blocks 30 are arranged into lines in the tread 20. The shape of the block 30 is not limited to this, and the block 30 may have a rhombic or parallelogram shape, as long as the blocks 30 are separated by the major grooves 21 and the minor grooves 22.

The major groove 21 is a groove that extends along the tire circumferential direction Y The major groove 21 is formed linearly along the tire circumferential direction Y. The minor groove 22 is a groove that extends along the tire axial direction X. The minor groove 22 is formed linearly along the tire axial direction X. It should be noted that the major groove 21 and the minor groove 22 of the present embodiment are not limited to these shapes, and the major groove 21 may be formed at an angle to the tire circumferential direction Y, and the minor groove 22 may be formed at an angle to the tire axial direction X.

[Sipe]

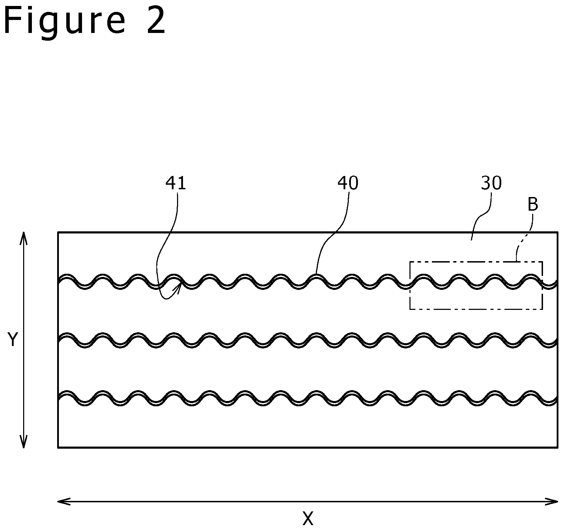

The sipes 40 will be described with reference to FIG. 2.

As shown in FIG. 2, the sipes 40 are formed in the block 30. The sipe 40 is a groove that extends along the tire axial direction X. Wall surfaces 41 of the sipe 40 are formed in a waveform along the tire axial direction X (described in detail below). For example, three sipes 40 are formed at equal intervals in the tire circumferential direction Y of the block 30. The depth of the groove of the sipe 40 is preferably 60 to 80% of the length of the block 30 in the tire radial direction Z.

The number and shape of the sipes 40 are not limited to those in the present embodiment, and three to five sipes 40 may be formed in the block 30. The sipes 40 may also be formed at an angle to the tire axial direction X. Furthermore, the sipes 40 may be open sipes that penetrate the sides of the block 30 or may be closed sipes that do not penetrate the sides of the block 30.

The sipes 40 soften the block 30 to increase the area of the surface that contacts with the road surface, and thereby increase friction with the road surface. The sipes 40 also provide an edge effect and a water removing effect on an icy and snowy road. The edge effect is the effect of increasing grip by scratching the surface of the icy and snowy road with the corners of the blocks 30 or the sipes 40. The water removing effect is the effect of capturing water in a gap in the sipe 40 on the icy and snowy road.

[Waveform of Sipes]

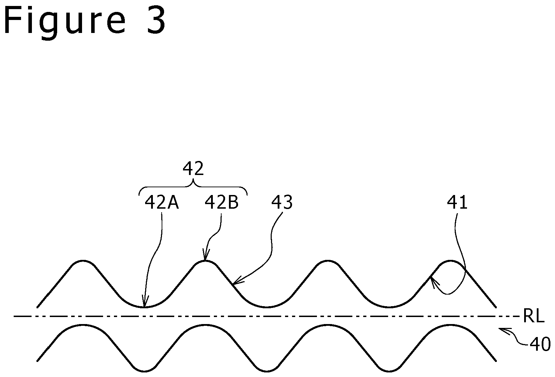

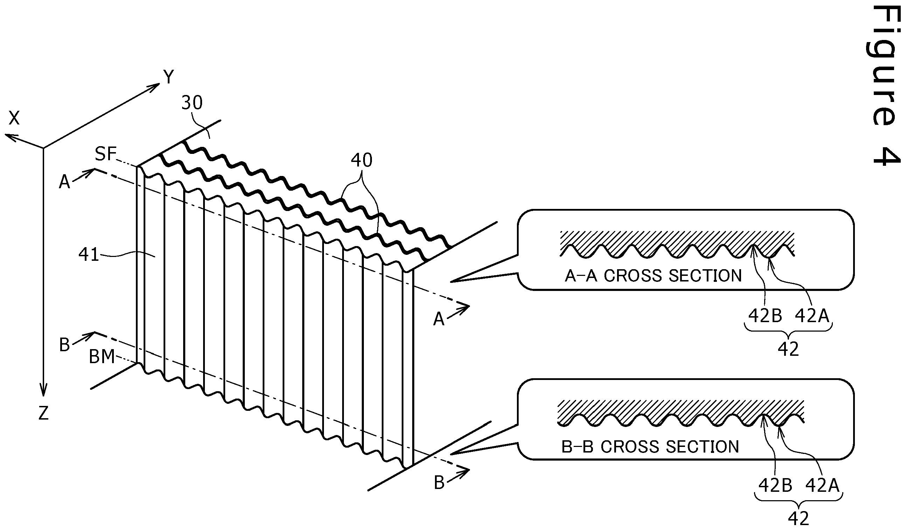

The waveform of the sipes 40 will be described with reference to FIGs. 3 and 4.

As shown in FIG. 3, the wall surfaces 41 of the sipe 40 are formed in a waveform from the block surface side to the block bottom side when viewed from the tire radial direction Z. In other words, the wall surfaces 41 of the sipe 40 are formed in a waveform in cross section, perpendicular to the tire radial direction Z. The wall surface 41 of the sipe 40 is a wall (surface) perpendicular to the tire circumferential direction Y of the sipe 40. By forming the wall surfaces 41 of the sipes 40 in a waveform, it is possible to further increase the above edge effect.

Although, in the present embodiment, one wall surface 41 and the other wall surface 41 of the sipe 40 are formed in a waveform, this is not limiting. Only the one wall surface 41 of the sipe 40 may be formed in a waveform, or only the other wall surface 41 of the sipe 40 may be formed in a waveform.

More specifically, the wall surfaces 41 of the sipe 40 are formed in a waveform including a plurality of curved portions 42 when viewed from the tire radial direction Z. The plurality of curved portions 42 include inwardly curved portions 42A that bulge toward the inside of the sipe 40 and outwardly curved portions 42B that bulge toward the outside of the sipe 40. The inwardly curved portions 42A and the outwardly curved portions 42B are arranged alternately to form the waveform. A straight portion 43 is also formed between the inwardly curved portion 42A and the outwardly curved portion 42B.

In other words, when a reference line RL is drawn at the center of the width of the sipe 40 (length in the tire circumferential direction Y) along the longitudinal direction of the sipe 40, the inwardly curved portion 42A is the curved portion 42 that bulges toward the reference line RL, and the outwardly curved portion 42B is the curved portion 42 that bulges toward the opposite side of the reference line RL.

As shown in FIG. 4, although the radius of curvature R1 of the inwardly curved portion 42A and the radius of curvature R2 of the outwardly curved portion 42B differ on the block surface side in the tire radial direction Z (cross-section along line A-A in the figure), they are identical on the block bottom side (cross-section along line B-B in the figure). The waveform is thus continuously changed in the tire radial direction Z such that the radius of curvature R1 of the inwardly curved portion 42A and the radius of curvature R2 of the outwardly curved portion 42B that differ on the block surface side become identical to each other on the block bottom side.

Here, assuming that the sipe depth (from the block surface SF to the block bottom BM) is 100, the block surface side in the tire radial direction Z is preferably within a range of distance of 30 from the block surface SF. In addition, assuming that the sipe depth is 100, the block bottom side in the tire radial direction Z is preferably within a range of distance of 70 from the block bottom BM.

On the block surface side, the radius of curvature R1 of the inwardly curved portion 42A is formed to be larger than the radius of curvature R2 of the outwardly curved portion 42B. Here, a larger radius of curvature indicates that the curve is gentler.

More specifically, on the block surface side, assuming that the distance between the center of the inwardly curved portion 42A and the center of the outwardly curved portion 42B (pitch of the waveform) is P (mm), the thickness of the sipe 40 (length in the tire circumferential direction) is t (mm), and that the radius of curvature of the inwardly curved portion 42A is R1 (mm), the following expression holds:

$$[\text{Expression 1}] \qquad 0.5 * P - 0.5 * t \leq R1 \leq 0.6 * P$$

Here, if the radius of curvature R1 of the inwardly curved portion 42A is larger than 0.6 * P, the waveform becomes smaller and the binding force at the wall surfaces 41 of the sipe 40 becomes smaller, resulting in reduction in inclination prevention performance. In addition, if the radius of curvature R1 of the inwardly curved portion 42A is smaller than 0.5 * P - 0.5 * t, a gap between the inwardly curved portion 42A and the outwardly curved portion 42B becomes smaller, resulting in reduction in braking performance on a wet road surface (described below).

Assuming that the radius of curvature of the outwardly curved portion 42B is R2 (mm), the radius of curvature R2 is within the range of the following expression:

$$[\text{Expression 2}] \qquad 1.1 \leq R1 / R2 \leq 6.0$$

Furthermore, the radius of curvature R2 is preferably within the range of the following expression:

$$[\text{Expression 3}] \qquad 1.5 \leq R1 / R2 \leq 4.0$$

Here, if the gap between the inwardly curved portion 42A and the outwardly curved portion 42B becomes too large, the binding force at the wall surfaces 41 of the sipe 40 becomes small.

[Effects]

The pneumatic tire 10 can improve braking performance on wet road surfaces and improve steering stability performance on dry road surfaces. More specifically, in the sipe 40 of the pneumatic tire 10, the radius of curvature R1 of the inwardly curved portion 42A and the radius of curvature R2 of the outwardly curved portion 42B of the waveform at the block surface SF are formed to differ, and this makes it possible to reduce stiffness (surface stiffness) of the block surface SF. On the other hand, the radius of curvature R1 of the inwardly curved portion 42A and the radius of curvature R2 of the outwardly curved portion 42B of the waveform at the block bottom BM of the sipe 40 are formed to be identical. This makes it possible to eliminate the gap in the sipe 40 when a load is applied and increase the pressure between the sipes 40, thereby increasing the stiffness (in-plane stiffness) of the block bottom BM in the tire radial direction.

The reduction in surface stiffness allows for increase in the ground contact area of the block 30, removal of water from the wet road surface, and increase in the coefficient of friction between the block 30 and the road surface, thereby improving braking performance of the pneumatic tire 10. On the other hand, the increase in the in-plane stiffness allows for increase in the ground pressure per unit area of the block 30, thereby enhancing the driving force. In other words, the pneumatic tire 10 can reduce the surface stiffness and increase the in-plane stiffness, thereby improving braking performance on wet road surfaces and improving steering stability performance on dry road surfaces.

[Tire Mold]

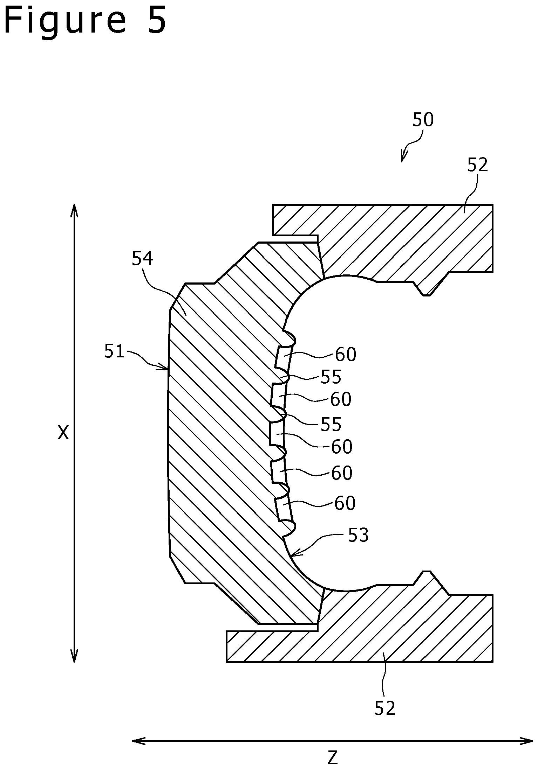

A tire mold 50, which is an embodiment of the present invention, will be described with reference to FIG. 5.

The mold 50 is a mold for forming the above pneumatic tire 10. The pneumatic tire 10 has the tread 20 including the blocks 30, in which the sipes 40 are formed as described above, and sidewalls (not shown) forming side surfaces. The mold 50 can be used to mold the pneumatic tire 10 that can improve braking performance on wet road surfaces and improve steering stability performance on dry surfaces.

Components of the mold 50 will be described below with reference to the tire axial direction X, the tire circumferential direction Y, and the tire radial direction Z of the above pneumatic tire 10 formed by the mold 50.

The mold 50 has a tread mold 51 for molding a surface of the tread 20 of the pneumatic tire 10 and a pair of side molds 52 for molding surfaces of the sidewalls.

The tread mold 51 has a body 54 having a tread forming surface 53, projections 55 protruding from the tread forming surface 53, and sipe blades 60 protruding from the tread forming surface 53 and provided between the projections 55.

The body 54 is made of a metallic material, such as aluminum alloy. The aluminum alloy preferably includes AC4 or AC7 aluminum, for example. The projections 55 are portions for molding the major grooves 21 in the pneumatic tire 10. The projections 55 are made of the same material as the body 54.

[Sipe Blades]

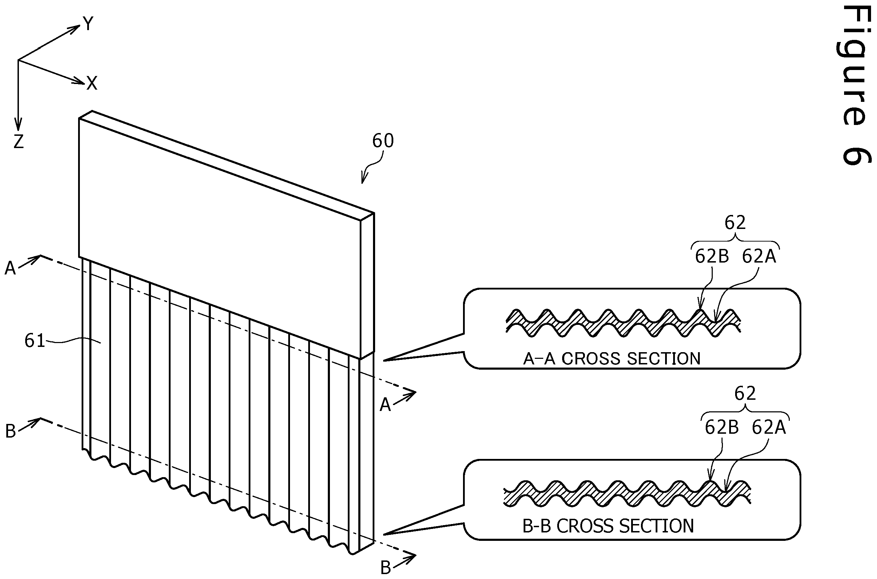

The sipe blade 60, which is an embodiment of the present invention, will be described with reference to FIG. 6.

The sipe blades 60 are provided for molding the sipes 40 in the pneumatic tire 10. The sipe blades 60 protrude in the tire radial direction Z from the tread forming surface 53 between the protrusions 55. The sipe blade 60 may be flat and made of a metallic material, such as stainless steel. The stainless steel preferably includes, for example, SUS303, SUS304, SUS630, and SUS631. When a three-dimensional molding machine is used, 17-4PH which is equivalent to SUS304L and SUS630 may be preferably used.

In general, a method of processing the sipe blade 60 includes forming the shape of the sipe blade 60 by using a press molding machine. To cause a change in shape of the sipe blade 60 in the thickness direction as in the sipe blade 60 of the present embodiment, the method may include cutting the sipe blade by machining. A three-dimensional molding machine may be used to make a complicated shape that is difficult to achieve by machining.

A side surface 61 of the sipe blade 60 is formed in a waveform when viewed from the tire radial direction Z. More specifically, the side surface 61 of the sipe blade 60 is formed in a waveform including a plurality of curved portions 62 when viewed from the tire radial direction Z. Here, the plurality of curved portions 62 include inwardly curved portions 62A that bulge toward the inside of the sipe blade 60 and outwardly curved portions 62B that bulge toward the outside of the sipe blade 60. The inwardly curved portions 62A and the outwardly curved portions 62B are arranged alternately to form the waveform.

Although the radius of curvature R1 of the inwardly curved portion 62A and the radius of curvature R2 of the outwardly curved portion 62B differ on the block surface side in the tire radial direction Z (cross-section along line A-A in the figure), they are identical on the block bottom side (cross-section along line B-B in the figure). The waveform is thus continuously changed in the tire radial direction Z such that the radius of curvature R1 of the inwardly curved portion 62A and the radius of curvature R2 of the outwardly curved portion 62B that differ on the block surface side become identical to each other on the block bottom side.

Here, assuming that the sipe depth (from the block surface SF to the block bottom BM) is 100, the block surface side in the tire radial direction Z is preferably within a range of distance of 30 from the block surface SF. In addition, assuming that the sipe depth is 100, the block bottom side in the tire radial direction Z is preferably within a range of distance of 70 from the block bottom BM.

On the block surface side, the radius of curvature R1 of the inwardly curved portion 62A is formed to be larger than the radius of curvature R2 of the outwardly curved portion 62B.

[Example 1]

The present invention will be further described by using examples, but the present invention is not limited to these examples.

<Comparative Example 1>

A pneumatic tire B1 (tire size: 205/55R16, rim size: 16 * 6.5JJ) with sipes was made such that each sipe has curved portions on its wall surfaces as shown in FIGs. 1 to 4. The thickness t of a sipe, the pitch P of a waveform of a wall surface of the sipe, the radius of curvature of an inwardly curved portion on the block surface side $R_{SF}1$, the radius of curvature of an outwardly curved portion on the block surface side $R_{SF}2$, the radius of curvature of an inwardly curved portion on the block bottom side $R_{BM}1$, and the radius of curvature of an outwardly curved portion on the block bottom side $R_{BM}2$, are as follows:

Pitch of waveform P: 2.0 mm
Thickness of sipe t: 0.5 mm
Radius of curvature of the inwardly curved portion on the block surface side $R_{SF}1$: 0.75 mm
Radius of curvature of the outwardly curved portion on the block surface side $R_{SF}2$: 1.25 mm
Radius of curvature of the inwardly curved portion on the block bottom side $R_{BM}1$: 0.75 mm
Radius of curvature of the outwardly curved portion on the block bottom side $R_{BM}2$: 1.25 mm

<Comparative Example 2>

A pneumatic tire B2 was made in the same manner as Comparative Example 1, except that the radii of curvature of the inwardly curved portion on the block bottom side $R_{BM}1$ and the outwardly curved portion on the block bottom side $R_{BM}2$ were changed.

Pitch of waveform P: 2.0 mm
Thickness of sipe t: 0.5 mm
Radius of curvature of the inwardly curved portion on the block surface side $R_{SF}1$: 0.75 mm
Radius of curvature of the outwardly curved portion on the block surface side $R_{SF}2$: 1.25 mm
Radius of curvature of the inwardly curved portion on the block bottom side $R_{BM}1$: 1.2 mm
Radius of curvature of the outwardly curved portion on the block bottom side $R_{BM}2$: 0.75 mm

<Example 1>

A pneumatic tire A1 was made in the same manner as Comparative Example 1, except that the radius of curvature of the outwardly curved portion on the block bottom side $R_{BM}2$ was changed.

Pitch of waveform P: 2.0 mm
Thickness of sipe t: 0.5 mm
Radius of curvature of the inwardly curved portion on the block surface side $R_{SF}1$: 0.75 mm
Radius of curvature of the outwardly curved portion on the block surface side $R_{SF}2$: 1.25 mm
Radius of curvature of the inwardly curved portion on the block bottom side $R_{BM}1$: 0.75 mm
Radius of curvature of the outwardly curved portion on the block bottom side $R_{BM}2$: 0.75 mm

<Example 2>

A pneumatic tire A2 was made in the same manner as Comparative Example 1, except that the radii of curvature of the outwardly curved portion on the block surface side $R_{SF}2$, the inwardly curved portion on the block bottom side $R_{BM}1$, and the outwardly curved portion on the block bottom side $R_{BM}2$ were changed.

Pitch of waveform P: 2.0 mm
Thickness of sipe t: 0.5 mm
Radius of curvature of the inwardly curved portion on the block surface side $R_{SF}1$: 0.75 mm
Radius of curvature of the outwardly curved portion on the block surface side $R_{SF}2$: 0.5 mm
Radius of curvature of the inwardly curved portion on the block bottom side $R_{BM}1$: 0.5 mm
Radius of curvature of the outwardly curved portion on the block bottom side $R_{BM}2$: 0.5 mm

<Example 3>

A pneumatic tire A3 was made in the same manner as Comparative Example 1, except that the radii of curvature of the outwardly curved portion on the block surface side $R_{SF}2$, the inwardly curved portion on the block bottom side $R_{BM}1$, and the outwardly curved portion on the block bottom side $R_{BM}2$ were changed.

Pitch of waveform P: 2.0 mm
Thickness of sipe t: 0.5 mm

Radius of curvature of the inwardly curved portion on the block surface side $R_{SF}1$: 0.75 mm
Radius of curvature of the outwardly curved portion on the block surface side $R_{SF}2$: 0.3 mm
Radius of curvature of the inwardly curved portion on the block bottom side $R_{BM}1$: 0.3 mm
Radius of curvature of the outwardly curved portion on the block bottom side $R_{BM}2$: 0.3 mm

<Example 4>

A pneumatic tire A4 was made in the same manner as Comparative Example 1, except that the radii of curvature of the inwardly curved portion on the block surface side $R_{SF}1$, the outwardly curved portion on the block surface side $R_{SF}2$, the inwardly curved portion on the block bottom side $R_{BM}1$, and the outwardly curved portion on the block bottom side $R_{BM}2$ were changed.

Pitch of waveform P: 2.0 mm
Thickness of sipe t: 0.5 mm
Radius of curvature of the inwardly curved portion on the block surface side $R_{SF}1$: 1.2 mm
Radius of curvature of the outwardly curved portion on the block surface side $R_{SF}2$: 0.3 mm
Radius of curvature of the inwardly curved portion on the block bottom side $R_{BM}1$: 0.3 mm
Radius of curvature of the outwardly curved portion on the block bottom side $R_{BM}2$: 0.3 mm

The pneumatic tires A1 to A4 and B1 and B2 were installed on all wheels of a test vehicle (front-wheel drive vehicle, displacement 2000cc) with an air pressure of 230 kPa, and braking performance on wet road surfaces and steering stability performance on dry road surfaces were evaluated by the following method. The evaluation results are shown in Table 1.

[Evaluation of Braking Performance on Wet Road Surface]

The above test vehicle was run on a wet road surface (asphalt road surface on which water was sprinkled), and the braking distance from an initial speed of 40 km/h was measured. Numerical values obtained by dividing the braking distances of the comparative examples by the braking distance of Comparative Example 1 and multiplying the reciprocals of the obtained values by 100 are used as indexes. The results show that the larger the index, the shorter the braking distance and the better the braking performance on the wet road surface.

[Evaluation of Steering Stability Performance on Dry Road Surface]

Steering stability performance was evaluated based on the driver's perception when the test vehicle was driven on a dry road surface. The results were compared with steering stability performance of Comparative Example 1 and evaluated in seven levels: "much worse", "worse", "somewhat worse", "equal", "somewhat better", "better", and "much better".

[Table 1]

| | | Comparativ e Example 1 | Comparative Example 2 | Example 1 | Exam ple 2 | Exa mple 3 | Exam ple 4 |
|---|---|---|---|---|---|---|---|
| P | | 2.0 | 2.0 | 2.0 | 2.0 | 2.0 | 2.0 |
| t | | 0.5 | 0.5 | 0.5 | 0.5 | 0.5 | 0.5 |
| Block surface side | $R_{SF}1$ | 0.75 | 0.75 | 0.75 | 0.75 | 0.75 | 1.2 |
| | $R_{SF}2$ | 1.25 | 1.25 | 1.25 | 0.5 | 0.3 | 0.3 |
| Bottom | $R_{BM}1$ | 0.75 | 1.2 | 0.75 | 0.5 | 0.3 | 0.3 |
| | $R_{BM}2$ | 1.25 | 0.75 | 0.75 | 0.5 | 0.3 | 0.3 |
| Braking Performance on Wet Road Surface | | 100 | 100 | 100 | 101 | 101 | 102 |
| Steering Stability Performance on Dry Road Surface | | | Wors e | Somewha t better | better | Much better | Bette r |

As shown in Table 1, Comparative Example 1 adopted a general waveform sipe.

In Comparative Example 2, because it is impossible to close the sipe 40 entirely, the in-plane stiffness is reduced, and the steering stability performance on the dry road surface is reduced.

Although, in Example 1, the braking performance on the wet road surface is equal to that of Comparative Example 1, the in-plane stiffness is increased, and the steering stability performance on the dry road surface is improved.

In Examples 2 and 3, the surface stiffness is lower than that in Example 1. The contact area is thus increased, and the braking performance on the wet road surface is improved compared to Example 1. In addition, by reducing the radius of curvature of the waveform of the sipes on the block surface side and the block bottom side, the surface pressure between the sipes increases, and the in-plane stiffness increases, resulting in improved steering stability on the dry road surface.

Although, in Example 4, the same effect as in Examples 2 and 3 was obtained, the surface stiffness is lower than those in the other examples, and thus the braking performance on the wet surface is slightly improved. The steering stability performance on the dry surface is similar to that in Example 2.

The present invention is not limited to the above embodiments and variations thereof, and, as a matter of course, various modifications and improvements can be made without departing from the scope of the claims herein.

## Claims

1. A pneumatic tire (10) having a tread (20) comprising a block (30) in which a sipe (40) is formed, wherein

   at least one wall surface (41) of the sipe (40) is formed in a waveform including a plurality of curved portions (42) extending from a block surface side to a block bottom side when viewed from a tire radial direction (Z),
   the curved portions (42) include an inwardly curved portion (42A) that bulges toward the inside of the sipe (40) and an outwardly curved portion (42B) that bulges toward the outside of the sipe (40), and
   the radii of curvature of the inwardly curved portion (42A) and the outwardly curved portion (42B) differ on the block surface side in the tire radial direction (Z), **characterized in that** the radii of curvature of the inwardly curved portion (42A) and the outwardly curved portion (42B) are identical on the block bottom side in the tire radial direction (Z).

2. The pneumatic tire (10) according to Claim 1, wherein the radius of curvature of the inwardly curved portion (42A) is larger than that of the outwardly curved portion (42B) on the block surface side.

3. The pneumatic tire (10) according to Claim 1 or 2, wherein, on the block surface side, assuming that the pitch of the waveform is P (mm), the thickness of the sipe (40) is t (mm), and that the radius of curvature of the inwardly curved portion (42A) is R1 (mm), the following expression holds:

$$[\text{Expression 1}] \quad 0.5 * P - 0.5 * t \le R1 \le 0.6 * P$$

4. The pneumatic tire (10) according to Claim 3, wherein on the block surface side, assuming that the radius of curvature of the outwardly curved portion (42B) is R2 (mm), the following expression holds:

$$[\text{Expression 2}] \quad 1.1 \le R1 / R2 \le 6.0$$

5. A tire mold (50) with a sipe blade (60) for forming a sipe (40) in a block (30) of a tread (20) of a pneumatic tire (10), wherein

   at least one side surface (61) of the sipe blade (60) is formed in a waveform including a plurality of curved portions (62) when viewed from a tire radial direction (Z),
   the curved portions (62) include an inwardly curved portion (62A) that bulges toward the inside of the sipe blade (60) and an outwardly curved portion (62B) that bulges toward the outside of the sipe blade (60), and
   the radii of curvature of the inwardly curved portion (62A) and the outwardly curved portion (62B) differ on a block surface side in the tire radial direction (Z), **characterized in that** the radii of curvature of the inwardly curved portion (62A) and the outwardly curved portion (62B) are identical on a block bottom side in the tire radial direction (Z).

# EP 4 357 164 B1

**Patentansprüche**

1. Ein Luftreifen (10) mit einer Reifenlauffläche (20), die einen Profilblock (30) umfasst, in welchem ein Feineinschnitt (40) ausgebildet ist, wobei:

   - mindestens eine Wandungsfläche (41) des Feineinschnitts (40) in Wellenform, einschließlich einer Vielzahl kurvenförmiger Bereiche (42), die sich von einer Oberseite des Profilblocks zu einer Unterseite des Profilblocks, in einer radialen Richtung (Z) des Reifens gesehen, erstrecken, ausgebildet ist,
   - die kurvenförmigen Bereiche (42) einen nach innen gekrümmten Teil (42A), der sich zur Innenseite des Feineinschnitts (40) hin ausbaucht, und einen nach außen gekrümmten Teil (42B), der sich zur Außenseite des Feineinschnitts (40) hin ausbaucht, umfassen, und
   - die Krümmungsradien des nach innen gekrümmten Teils (42A) und des nach außen gekrümmten Teils (42B) sich auf der Oberseite des Profilblocks in der radialen Richtung (Z) des Reifens voneinander unterscheiden,

   **dadurch gekennzeichnet, dass** die Krümmungsradien des nach innen gekrümmten Teils (42A) und des nach außen gekrümmten Teils (42B) auf der Unterseite des Profilblocks in der radialen Richtung (Z) des Reifens identisch sind.

2. Der Luftreifen (10) nach Anspruch 1, wobei auf der Oberseite des Profilblocks der Krümmungsradius des nach innen gekrümmten Teils (42A) größer als derjenige des nach außen gekrümmten Teils (42B) ist.

3. Der Luftreifen (10) nach Anspruch 1 oder 2, wobei auf der Oberseite des Profilblocks, vorausgesetzt, dass der Wellenabstand der Wellenform P (mm) beträgt, die Breite des Feineinschnitts (40) t (mm) und der Krümmungsradius des nach innen gekrümmten Teils (42A) R1 (mm) beträgt, folgende Gleichung gilt:

$$[\text{Gleichung 1}] \quad 0,5 \cdot P - 0,5 \cdot t \leq R1 \leq 0,6 \cdot P.$$

4. Der Luftreifen (10) nach Anspruch 3, wobei auf der Oberseite des Profilblocks, vorausgesetzt, dass der Krümmungsradius des nach außen gekrümmten Teils (42B) R2 (mm) beträgt, folgende Gleichung gilt:

$$[\text{Gleichung 2}] \quad 1,1 \leq R1/R2 \leq 6,0.$$

5. Eine Luftreifenform (50) mit einem Feineinschnittblatt (60) für die Bildung eines Feineinschnitts (40) in einem Profilblock (30) einer Reifenlauffläche (20) eines Luftreifens (10), wobei:

   - mindestens eine Seitenfläche (61) des Feineinschnittblatts (60) in Wellenform, einschließlich einer Vielzahl kurvenförmiger Bereiche (62), in einer radialen Richtung (Z) des Reifens gesehen, ausgebildet ist,
   - die kurvenförmigen Bereiche (62) einen nach innen gekrümmten Teil (62A), der sich zur Innenseite des Feineinschnittblatts (60) hin ausbaucht, und einen nach außen gekrümmten Teil (62B), der sich zur Außenseite des Feineinschnittblatts (60) hin ausbaucht, umfassen, und
   - die Krümmungsradien des nach innen gekrümmten Teils (62A) und des nach außen gekrümmten Teils (62B) sich auf einer Oberseite des Profilblocks in der radialen Richtung (Z) des Reifens voneinander unterscheiden,

   **dadurch gekennzeichnet, dass** die Krümmungsradien des nach innen gekrümmten Teils (62A) und des nach außen gekrümmten Teils (62B) auf einer Unterseite des Profilblocks in der radialen Richtung (Z) des Reifens identisch sind.

**Revendications**

1. Pneumatique (10) ayant une bande de roulement (20) comprenant un bloc (30) dans lequel est formée une lamelle (40),

   au moins une surface de paroi (41) de la lamelle (40) étant réalisée en forme d'onde comprenant une pluralité de parties incurvées (42) s'étendant depuis un côté surface du bloc jusqu'à un côté fond du bloc lorsqu'elles sont considérées selon une direction radiale du pneu (Z),
   les parties incurvées (42) comprenant une partie incurvée vers l'intérieur (42A) qui est bombée vers l'intérieur de la lamelle (40) et une partie incurvée vers l'extérieur (42B) qui est bombée vers l'extérieur de la lamelle (40), et
   les rayons de courbure de la partie incurvée vers l'intérieur (42A) et de la partie incurvée vers l'extérieur (42B)

9

diffèrent du côté surface du bloc dans la direction radiale du pneu (Z), **caractérisé en ce que** les rayons de courbure de la partie incurvée vers l'intérieur (42A) et de la partie incurvée vers l'extérieur (42B) sont identiques du côté fond du bloc dans la direction radiale du pneu (Z).

2. Pneumatique (10) selon la revendication 1, dans lequel le rayon de courbure de la partie incurvée vers l'intérieur (42A) est plus grand que celui de la partie incurvée vers l'extérieur (42B) du côté surface du bloc.

3. Pneumatique (10) selon la revendication 1 ou 2, dans lequel, du côté surface du bloc, en posant que le pas de la forme d'onde est P (mm), l'épaisseur de la lamelle (40) est t (mm), et que le rayon de courbure de la partie incurvée vers l'intérieur (42A) est R1 (mm), l'expression suivante s'applique :

[Expression 1]      $0,5 * P - 0,5 * t \leq R1 \leq 0,6 * P$

4. Pneumatique (10) selon la revendication 3, dans lequel du côté surface du bloc, en posant que le rayon de courbure de la partie courbée vers l'extérieur (42B) est R2 (mm), l'expression suivante est valable :

[Expression 2]      $1,1 \leq R1 / R2 \leq 6,0.$

5. Moule à pneu (50) avec une lame de lamelle (60) pour former une lamelle (40) dans un bloc (30) d'une bande de roulement (20) d'un pneumatique (10), dans lequel

au moins une surface latérale (61) de la lame de lamelle (60) est réalisée en forme d'onde comprenant une pluralité de parties incurvées (62) lorsqu'elle est considérée selon une direction radiale du pneu (Z),
les parties incurvées (62) comprennent une partie incurvée vers l'intérieur (62A) qui est bombée vers l'intérieur de la lame de lamelle (60) et une partie incurvée vers l'extérieur (62B) qui est bombée vers l'extérieur de la lame de lamelle (60), et
les rayons de courbure de la partie incurvée vers l'intérieur (62A) et de la partie incurvée vers l'extérieur (62B) diffèrent du côté surface du bloc dans la direction radiale du pneu (Z), **caractérisé en ce que** les rayons de courbure de la partie incurvée vers l'intérieur (62A) et de la partie incurvée vers l'extérieur (62B) sont identiques du côté fond du bloc dans la direction radiale du pneu (Z).

# Figure 1

# Figure 2

# Figure 3

# Figure 4

# Figure 5

Figure 6

EP 4 357 164 B1

**EP 4 357 164 B1**

## REFERENCES CITED IN THE DESCRIPTION

### Patent documents cited in the description

- JP 2003118322 A
- JP 2010202009 A
- EP 1223054 A1
- KR 20220087039 A
- EP 2119575 A1